# FASCICULE DE BREVET EUROPEEN

(11) **EP 0 622 595 B1**
(45) Date de publication et mention de la délivrance du brevet: **04.02.1998**
(21) Numéro de dépôt: 94400772.3
(22) Date de dépôt: 11.04.1994
(51) Int. Cl.: F25J 3/04

(54) **Procédé et installation pour la séparation de l'air**
Lufttrennungsverfahren und Anlage dafür
Air separation process and installation therefor

(30) Priorité: 29.04.1993 FR 9305062; 28.09.1993 FR 9311509
(43) Date de publication de la demande: 02.11.1994
(60) Demande divisionnaire: 97111828.6
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Darredeau, Bernard, F-78500 Sartouville (FR); Lehman, Jean-Yves, F-94700 Maisons-Alfort (FR); Peyron, Jean-Marc, F-94000 Creteil (FR)
(74) Mandataire: Mercey, Fiona Susan

(56) Documents cités:
- EP-A- 0 465 193
- EP-A- 0 519 688
- PATENT ABSTRACTS OF JAPAN vol. 17, no. 675 (M-1526)13 Décembre 1993 & JP-A-05 223 444 (NIPPON SANSO KK) 31 Aoüt 1993

## Description

La présente invention est relative à un procédé pour la separation de l'air, ainsi qu'à une installation conformément aux préambules des revendications 1 et 20, respectivement.

Un tel procédé et une telle installation sont connus du document EP-A-0 519 688.

Il est apparu dans les dernières années une demande pour des variations de marche rapides pour les appareils de séparation d'air (ASU). En particulier, cette demande se présente pour la technique de séparation d'air dans une colonne de distillation où l'oxygène produit est utilisé dans une centrale électrique de type IGCC (Integrated Gasifier Combined Cycle).

Dans des centrales électriques de ce type, récemment développées, l'électricité est produite à partir de charbon et d'oxygène. En raison de la demande variable en électricité des usagers, il est nécessaire que l'alimentation en oxygène suive également cette demande variable et que la pureté de l'oxygène soit constante (typiquement supérieure à 80 % pour les besoins du gazéifieur).

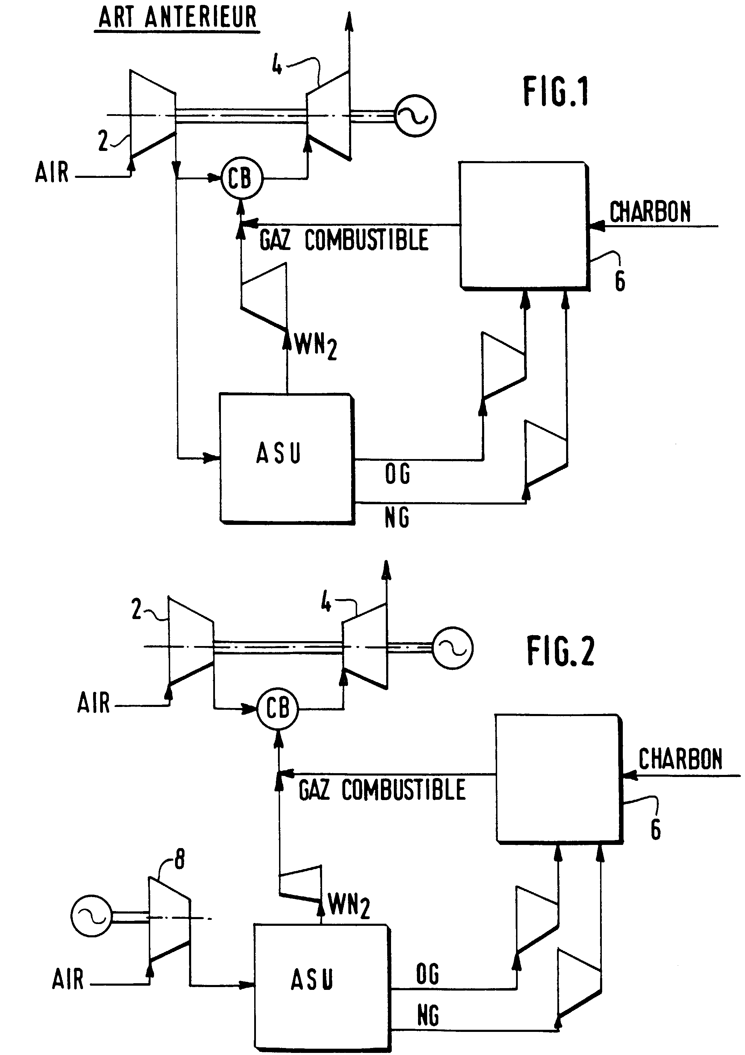

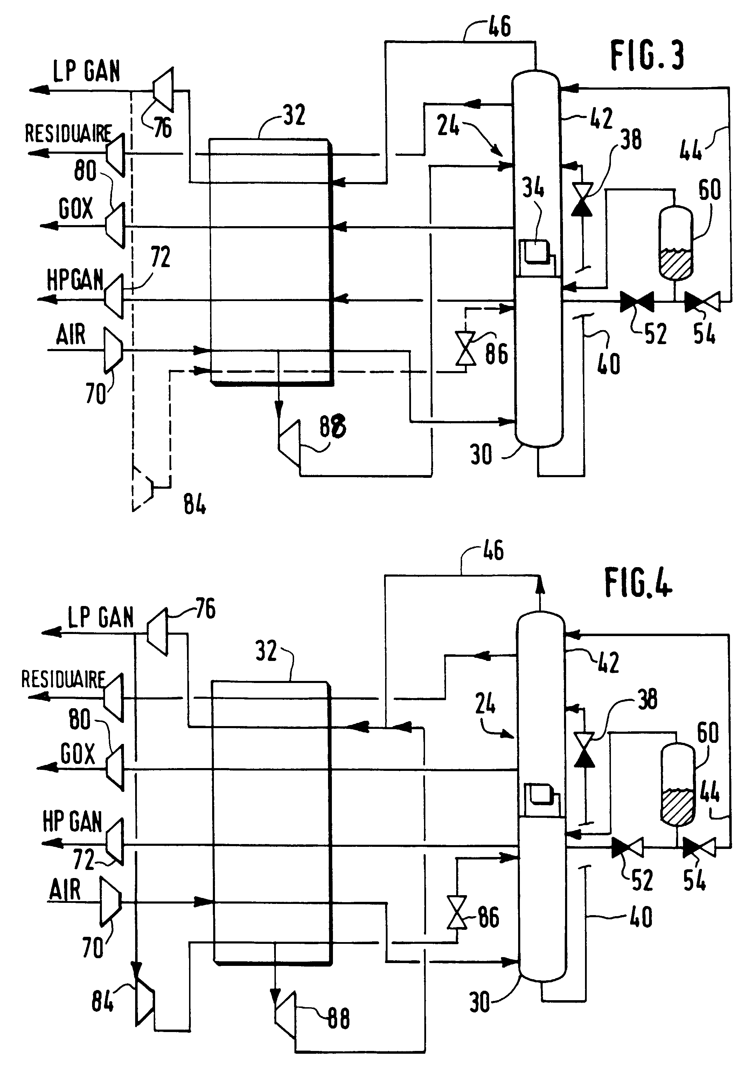

Dans le cas où l'unité de séparation d'air est associée à ladite centrale de type IGCC (figure 1), l'air de l'ASU qui est issu du compresseur 2 couplé mécaniquement à une turbine à gaz 4, a son débit et sa pression qui fluctuent. En effet, la variation rapide de la demande en électricité couplée à celle de l'oxygène envoyé à l'IGCC, entraîne une variation des gaz combustibles produits dans le gazéifieur 6 et une variation des gaz de combustion. Il en résulte une variation rapide du débit et de la pression de l'air comprimé dans le compresseur 2 et, par conséquent, du débit et de la pression de l'air envoyé à l'ASU.

Le problème qui se pose est donc de permettre à l'ASU de produire l'oxygène en quantité variable mais suffisante pour s'adapter à la demande variable en électricité, tout en maintenant une pureté constante pour répondre aux critères du gazéifieur 6 de l'IGCC, malgré les fluctuations de débit d'air consécutives à cette variation de demande électrique pour une ASU intégrée. Simultanément, l'azote résiduaire étant envoyé après compression à la turbine à gaz 4, il est imposé de maintenir la teneur en oxygène de cet azote en-dessous de certaines limites. Il faut donc maintenir la pureté de tous les produits de la distillation.

Lorsque le compresseur d'air 8 de l'ASU est indépendant du compresseur 2 de la turbine à gaz 4 (figure 2), le problème pour l'ASU est de fournir le bon débit d'oxygène envoyé au gazéifieur 6, en s'adaptant rapidement à la demande de celui-ci. Dans ce cas, le débit du compresseur d'air 8 varie approximativement comme le débit d'oxygène et sa pression de refoulement varie relativement peu.

L'objet de l'invention est de proposer une solution qui réponde à ces deux problèmes.

Une solution au problème posé par la variation de pression de l'air et de la colonne de distillation est proposée par la demande de brevet EP-A-0.519.688, comportant l'injection d'azote liquide dans la colonne, lorsque la pression diminue, et un soutirage et stockage d'azote liquide dans le cas contraire. Cette solution est destinée à compenser les phénomènes suivants :
- la génération de gaz de flash importante quand la quantité de liquide contenu dans la colonne (inventaire ou "hold-up") est importante et quand la pression baisse,
- le gaz de flash généré est riche en oxygène et rend la production d'azote pur plus difficile.

Par contre, le procédé selon EP-A-0.519.688 ne corrige pas le phénomène prépondérant qui se produit dans les colonnes de distillation pendant un changement de marche. Il s'agit de la variation d'inventaire de liquide se trouvant dans les colonnes. Cet inventaire est réduit de façon importante quand on réduit les débits de liquides, c'est-à-dire quand on réduit le débit d'air traité dans l'ASU. On se trouve alors avec un excédent de liquide que l'on doit évacuer si l'on ne veut pas retrouver tous les liquides en bas des colonnes et observer une perte de pureté des produits soutirés à ce point (en particulier l'oxygène).

L'invention a pour but de proposer une solution qui puisse répondre au problème posé par le changement rapide de débit d'air dans les colonnes de distillation (à garnissages ou plateaux).

En effet, les colonnes se comportent parfois de façon telle que, lorsqu'on fait varier le débit d'air de façon rapide, l'inventaire varie de façon plus importante autant du fait de cette variation que du fait de la production de gaz de flash ou de sa recondensation lors de la variation de pression. De façon inattendue, malgré l'importance des volumes de liquide sur colonnes de distillation, qui entraîne une vaporisation importante en cas de baisse de pression par exemple, la variation de ces volumes, du fait de la variation du débit, est encore plus importante de telle sorte qu'il est nécessaire, pour maintenir les teneurs des produits, de réduire le reflux en azote liquide en cas de baisse du débit d'air et de majorer ce reflux en cas d'augmentation du débit d'air.

La Demanderesse a donc découvert, de façon surprenante, qu'il faut faire exactement l'inverse de ce qui est décrit dans le brevet EP-A-O 519 688 en cas de changement de débit d'air pour une colonne de distillation comportant des plateaux perforés ou des garnissages structurés.

A cet effet, l'invention a pour objet un procédé pour la séparation de l'air dans un appareil de distillation cryogénique comportant une colonne de distillation et dans lequel l'air d'alimentation est séparé pour produire une fraction riche en oxygène et une fraction riche en azote comme produits, dans lequel les puretés de ces produits sont maintenues essentiellement constantes pendant les variations de demande de ce produit ou de débit ou de pression de l'air d'alimentation, caractérisé en ce que l'on maintient ces puretés constantes:
a) en introduisant un excédent d'un liquide riche en azote dans l'appareil de distillation si la demande de produit ou le débit de l'air d'alimentation augmentent ou
b) en soutirant un excédent d'un liquide riche en azote de l'appareil de distillation et en stockant ce liquide, si la demande de produit ou le débit de l'air d'alimentation diminuent.

L'invention a également pour objet une installation pour la séparation de l'air dans un appareil de distillation cryogénique comportant une colonne de distillation et dans laquelle l'air d'alimentation est séparé pour produire une fraction riche en oxygène et une fraction riche en azote comme produits, et des moyens pour assurer les puretés constantes de ces produits pendant les variations de demande de ce produit ou de débit ou de pression de l'air d'alimentation, ces moyens comprenant :
a) des moyens pour introduire un excédent d'un liquide riche en azote dans l'appareil de distillation si la demande de produit ou le débit de l'air d'alimentation augmentent ou
b) des moyens pour soutirer un excédent d'un liquide riche en azote de l'appareil de distillation, si la demande de produit ou le débit de l'air d'alimentation diminuent,
caractérisée en ce qu'elle comprend des moyens de stockage de liquide riche en azote dans une colonne de l'appareil de distillation.

La Demanderesse a découvert un phénomène tout à fait surprenant : quand on réduit la production et, par conséquent, les débits de gaz et de liquide traités dans au moins une colonne, on découvre que le comportement de cette (ces) colonne(s) est tel qu'il faut non plus injecter de l'azote liquide mais au contraire soutirer de l'azote liquide en cas de réduction de marche et de pression et en injecter en cas d'augmentation de charge (et des pressions).

L'explication est la suivante : quand on réduit la charge et les débits de gaz et de liquide dans la colonne (et la pression), il se produit deux phénomènes en sens inverse.

Le premier phénomène, lié à la réduction de pression, est un flash des liquides contenus dans la colonne. La quantité de gaz de flash générée est fonction de la chute de pression et de la quantité de liquide contenue dans la colonne.

Le deuxième phénomène est le changement d'inventaire de liquide dans la colonne qui résulte de la variation des débits de gaz et de liquide traités.

Or, de façon surprenante et contrairement à ce qui était généralement considéré jusqu'ici, on a découvert que le deuxième phénomène est prépondérant, même dans une colonne ayant essentiellement des plateaux perforés, quand la pression varie de façon sensiblement proportionnelle au débit d'air et, a fortiori, quand elle varie dans des proportions moindres que le débit d'air (ce qui est généralement le cas). La réduction d'inventaire de liquide, quand on réduit la charge, se traduit dans une colonne à plateaux par un excès de liquide situé sur chaque plateau (et dans une colonne à garnissage, par un excès de liquide situé dans chaque distributeur) qu'il faut évacuer si on veut éviter d'avoir un excès de reflux et une accumulation de liquide en cuve de la colonne avec une perte de pureté de l'oxygène puisque, simultanément, le chauffage en cuve de la colonne BP par condensation de l'azote, est réduit.

La découverte tout à fait surprenante que la Demanderesse a faite en étudiant le comportement de colonnes à plateaux perforés et à garnissages en changement de marche rapide est donc que, non seulement elles permettent d'éviter de perdre la pureté de l'azote au cours de la phase transitoire, mais qu'elles nécessitent, pour maintenir la pureté de l'oxygène, de prévoir un soutirage d'azote liquide, quand on réduit la marche et la pression, et une injection d'azote liquide quand on veut augmenter les productions, ceci afin de garnir les plateaux (ou dans une colonne à garnissages, le distributeur au sommet de la colonne) pour maintenir à tout moment un reflux suffisant en reconstituant l'inventaire suffisamment vite.

Une autre amélioration de la réponse de l'appareil pendant les changements de marche est apportée par les dispositions suivantes : le problème de réglage essentiel pendant la phase transitoire est de contrôler les flux gazeux montant dans la colonne pour maintenir les puretés aux deux extrémités (oxygène et azote). Or, le maintien de ces deux puretés pourrait devenir incompatible en situation transitoire. Il est donc tout à fait intéressant de pouvoir rendre relativement indépendant pendant la phase transitoire le réglage de la pureté de l'oxygène et celui de l'azote. Si la colonne de distillation comprend une colonne BP et une colonne MP, on améliore beaucoup les conditions de distillation dans la partie supérieure de la colonne BP quand on réduit le débit de la turbine d'insufflation (dans le cas où on turbine de l'air qui alimente la colonne BP). Une amélioration du contrôle de l'ASU en changement de marche est donc de réduire pendant la phase transitoire le débit de la turbine d'insufflation en dessous de ce qu'il devrait être à l'équilibre à chaque instant, ceci permettant d'améliorer les puretés de l'oxygène et de l'azote à la fois, donc de mieux les contrôler. On peut faire la même chose avec une turbine détendant de l'azote MP, dans le cas où la diminution d'azote MP turbiné est utilisée pour apporter un supplément de reflux et donc améliorer la distillation en colonne MP, et par suite dans la colonne BP.

Enfin, si le procédé comporte un cycle de soutien de distillation, on peut augmenter le débit de ce cycle en période transitoire ou réduire le débit de la turbine éventuellement associée à ce cycle.

Plusieurs exemples de réalisation de l'invention vont maintenant être décrits, en regard des dessins annexés, sur lesquels :
- la figure 3 représente un schéma de principe de deux formes de réalisation d'une installation selon l'invention ;
- les figures 4 et 5 représentent des schémas de principe d'autres formes de réalisation d'une installation selon l'invention ;
- la figure 6 représente un moyen de stockage selon l'invention ; et
- les figures 7 et 8 représentent les schémas de principe des figures 3 et 5, respectivement, illustrant les moyens de régulation.

Dans la figure 3, l'air est comprimé dans un compresseur 70 et est refroidi dans un échangeur de chaleur 32. L'air refroidi entre en cuve de la colonne moyenne pression (MP) 30 d'une double colonne de distillation 24. La colonne 24 est équipée de plateaux perforés. Or, les plateaux peuvent être au moins partiellement remplacés par des garnissages (structurés ou en vrac).

Dans la colonne MP 30, l'air est séparé en une vapeur d'azote et un liquide de cuve enrichi en oxygène. Une partie de la vapeur passe à un condenseur 34 dans la colonne basse pression (BP) où elle se condense et revient en reflux à la colonne MP 30. L'azote haute pression est soutiré de la colonne MP et l'autre partie est réchauffée dans l'échangeur 32 puis comprimé par un compresseur 72. Le liquide de cuve enrichi en oxygène est soutiré de la colonne MP 30 et injecté dans la colonne BP 42, par la ligne 40.

Pour produire un reflux pour la colonne BP 42, on soutire de l'azote liquide de la partie supérieure de la colonne MP 30, via la ligne 44, et on l'injecte dans la tête de la colonne BP 42. L'azote liquide de reflux, de ligne 44, et le liquide de cuve, de ligne 40, sont distillés pour produire de l'azote gazeux à basse pression (LP GAN) et de l'oxygène liquide.

Lorsque la demande en oxygène est constante, la pression dans la colonne 24 est maintenue grâce à des moyens de contrôle des débits d'oxygène et d'azote retirés de la colonne 24. La totalité de l'azote qui circule dans la conduite de reflux est envoyée en reflux de colonne 42. Rien n'est stocké dans la citerne 60 ; les vannes 52, 54 en amont et en aval de la citerne 60 contrôlent les débits qui y sont introduits et qui en sont soutirés.

Lorsque la demande en oxygène est moindre, la quantité de liquide dans la colonne 24 diminue et, par conséquent, il faut retirer un excédent du liquide riche en azote pour éviter un excès de reflux. On transfère ce liquide de la colonne 24 à la citerne 60 grâce à une réduction de débit de la conduite 44. En même temps, on soutire moins d'azote par la conduite 46.

Lorsque la demande en oxygène croît, pour maintenir un reflux suffisant dans l'appareil, on augmente le débit de la conduite 44 avec la vanne 54 et on injecte un excédent d'un liquide riche en azote.

Les figures 3, 4 et 5 illustrent quatre variantes, qui peuvent d'ailleurs être combinées, destinées à assurer la pureté des gaz produits.

Dans la figure 3, une partie de l'air d'alimentation comprimé par le compresseur 70 est détendu par une turbine d'insufflation 88 puis introduite dans la colonne basse pression 42.

On a représenté en traits pointillés sur la figure 3 un cycle de soutien : ici, une partie de l'azote comprimé par le compresseur 76 est comprimé par un autre compresseur 84, avant injection en tête de la colonne moyenne pression 30, afin de servir de soutien de rectification. Le gaz renvoyé dans la colonne MP 30 permet de soutirer davantage de liquide de la tête de colonne MP 30 vers la colonne BP 42 améliorant par conséquent le taux de reflux de la colonne BP 42 et donc sa capacité de distillation.

Ce soutien de rectification est utile également pendant les variations de charge de l'appareil. En cas de demande accrue d'oxygène gazeux, le soutien de rectification est augmenté en avance et donc plus rapidement que la charge de l'appareil, reculant d'autant les limites de décrochage des puretés. En cas de réduction, le soutien est diminué plus lentement que la charge de l'appareil.

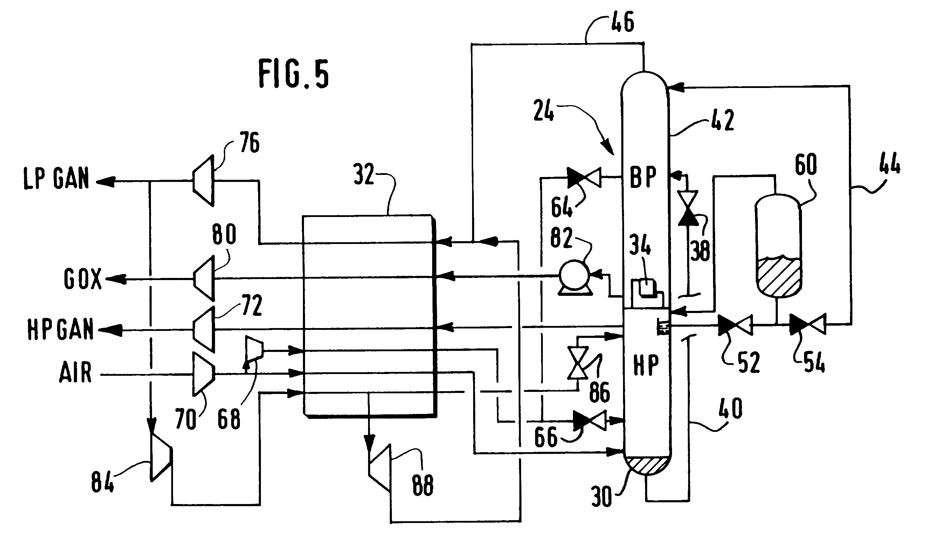

Un cycle de soutien est aussi illustré dans la figure 4 ici, une partie de l'azote du cycle de soutien est détendu par une turbine de détente 88 après refroidissement partiel et recyclé après chauffage dans le compresseur 76.

Dans la figure 5, l'installation illustrée est une variante de celle de la figure 4. Une partie de l'air comprimé par le compresseur 70 est surpressée dans le compresseur 68 avant d'être refroidie dans l'échangeur 32. Cette partie recomprimée est divisée en deux fractions sous forme liquide, dont une est introduite dans la colonne MP 30 et dont l'autre est introduite dans la colonne BP 42.

De l'oxygène est soutiré sous forme liquide de la cuve de la colonne BP 42 et passe à l'échangeur 32 après compression dans une pompe 82 et est vaporisé à contre-courant de l'air surpressé.

Lors d'une réduction de la demande en oxygène, et une réduction de la pression de l'air, le débit d'air comprimé et liquéfié dans la ligne d'échange 32 est réduit moins vite que le débit de liquide riche en oxygène qui est vaporisé dans la ligne d'échange, afin que l'excédent de débit d'air surpressé absorbe au moins en partie l'excédent de réfrigération apporté par le déséquilibre entre les débits des gaz se réchauffant et des gaz se refroidissant dans la ligne d'échange pendant cette phase.

Lors d'une augmentation de la demande en oxygène, et une augmentation de la pression de l'air, le débit d'air comprimé et liquéfié est augmenté moins vite que le débit de liquide riche en oxygène qui est vaporisé dans la ligne d'échange, pour compenser le déséquilibre thermique qui se produit dans la ligne d'échange pendant cette phase résultant du déséquilibre du débit entre les produits se réchauffant et les produits se refroidissant dans celle-ci.

Le débit d'air surpressé permet de contrecarrer un déséquilibre de la ligne d'échange 32 dans les phases transitoires en modulant le débit total de calorigènes.

En cas de baisse de charge, le débit d'air surpressé sera maintenu supérieur à la corrélation normale débit d'oxygène/débit d'air surpressé. En cas d'augmentation de charge, on fera le contraire.

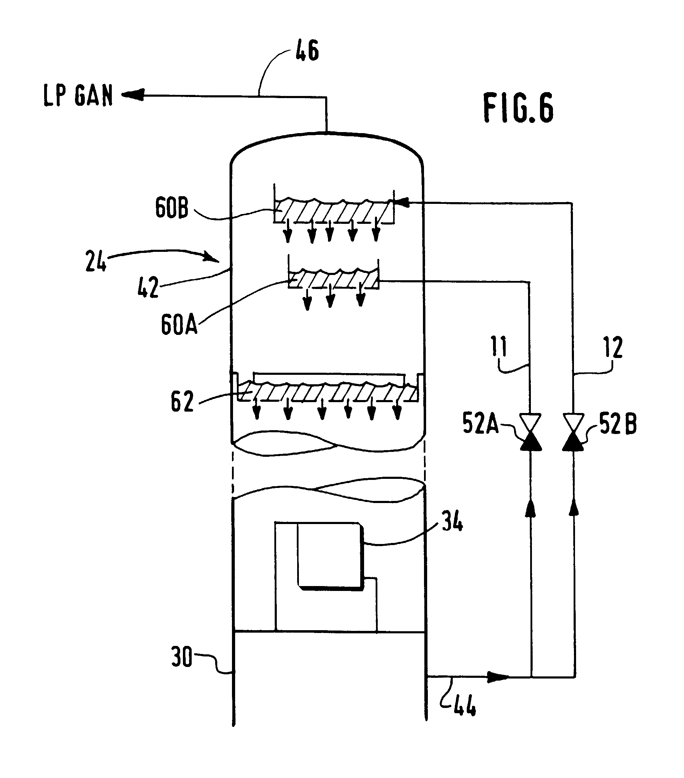

En variante, on peut remplacer la citerne 60 par un réservoir dans la colonne BP 42 au-dessus du distributeur de tête dans une colonne à garnissages (structurés ou en vrac) illustrée dans la figure 6. Le réservoir 60B est dimensionné pour laisser passer 50 % du débit nominal. Dans ces conditions, le volume de liquide qu'il contient est équivalent au volume de liquide que l'on veut stocker. Les deux réservoirs 60A, 60B sont reliés par les conduites 11, 12 aux vannes 52A, 52B respectives, elles-mêmes reliées à la tête de la colonne MP 30 par deux conduites.

L'association (O, F/ouverte, fermée) des vannes 52A, 52B, respectivement, fournit le régime 100 %. L'association (F, O) alimente seulement le réservoir 60B et fournit le régime 50 %. L'ouverture plus ou moins grande des vannes 52A, 52B, fournit le régime intermédiaire entre chacune des marches limites.

L'homme de l'art reconnaîtra que cette variante est un moyen de stockage qui convient à plusieurs procédés de distillation et à des types d'installation autres que ceux qui sont illustrés aux figures 3 à 5. Elle permet de stocker le liquide riche en azote à basse pression.

Si, dans les figures 3 à 5, la colonne de distillation 24 est toujours équipée d'un vaporiseur principal à film 34, l'homme de l'art reconnaîtra que ce vaporiseur n'est pas un élément essentiel de l'invention et peut être remplacé par d'autres dispositifs.

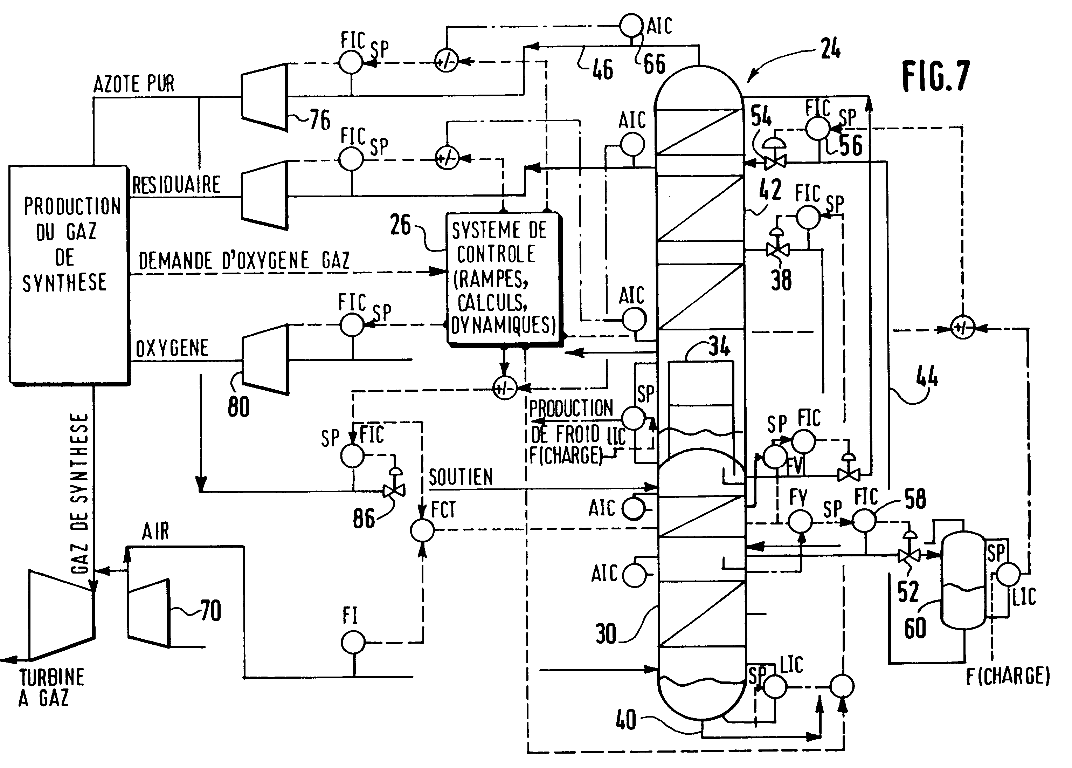

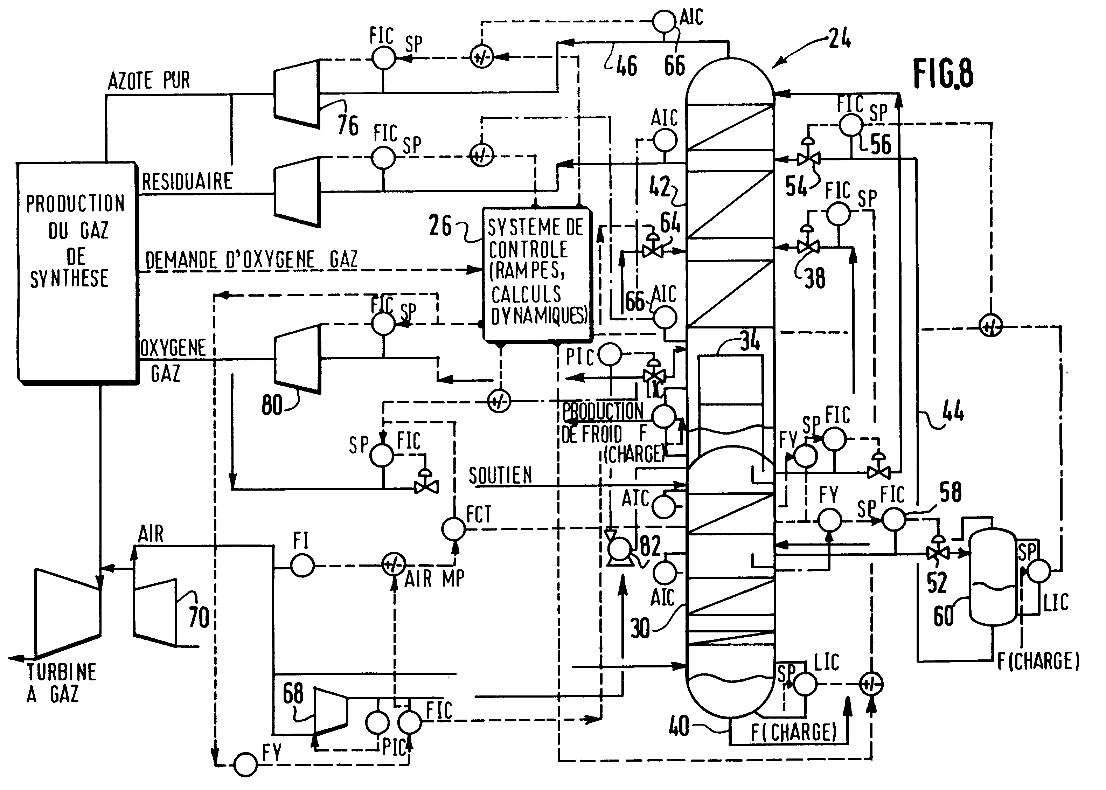

Les figures 7 et 8 illustrent en grand détail les moyens de régulation dans des installations des figures 3 (comprenant les caractéristiques représentées en traits pointillés), et 5, respectivement.

Les moyens de régulation comprennent des éléments de régulation connus tels que des FIC ("flow controllers") 56, 58, pour contrôler les débits, des AIC ("Analysis controllers") 66 et un ordinateur 26 qui relie tous les autres éléments et contrôle leurs fonctions.

Pour un point de fonctionnement stable, les débits sortant de l'appareil (résiduaire, oxygène gaz et azote gaz) définissent par bilan de matière le débit d'air entrant dans l'unité.

En cas de demande d'augmentation de charge, il suffit d'augmenter les débits gazeux sortant de la colonne BP 42 pour admettre plus de débit d'air dans la colonne MP 30. En effet, la pression de la colonne BP 42 baisse, augmentant l'écart moyen de température du vapo-condenseur et donc sa capacité de condensation (le débit d'air appelé dans la colonne MP 30 augmente).

En cas de demande de diminution de charge, il suffit de diminuer les débits gazeux sortants de la colonne BP 42 pour admettre moins de débit d'air dans la colonne MP 30. Le débit d'air admis augmente ou diminue de lui-même à la valeur nécessaire pour la production d'oxygène demandée à la pureté requise.

Le liquide entrant dans la citerne 60 venant du piquage de liquide pauvre de la colonne MP 30 est régulé par un FIC (flow controller) 58 agissant sur la vanne 52 d'envoi de liquide à la citerne 60. Son point de consigne est une fonction linéaire du débit d'air entrant dans la colonne MP 30, filtrée par une fonction dynamique prenant en compte les retards et le type de compensation dynamique (time delay, lead-lag, ramp...) permettant de gérer la rétention liquide de la colonne MP 30.

Le liquide sortant de la citerne 60 vers l'arrivée de liquide pauvre dans la colonne BP 42 est régulé par un FIC 56 agissant sur la vanne 54 d'envoi du liquide vers la colonne BP 42. Son point de consigne est une fonction dynamique prenant en compte le débit d'air calculé à partir de la demande d'oxygène gazeux traité par une rampe et une fonction de compensation dynamique permettant de gérer la rétention liquide du tronçon de colonne BP 42 situé entre l'arrivée de liquide pauvre et de liquide riche.

En état transitoire, les deux FIC 56, 58 ayant des points de consigne gérés par des dynamiques différentes, la citerne 60 se remplit ou se vide en descente ou augmentation de marche, respectivement.

En état stable, le FIC 56 sur le débit sortant est asservi à la régulation de niveau de la citerne 60 ; son point de consigne est bien sûr ajusté en fonction de la charge de l'appareil. Le point de consigne du FIC 58 installé sur le liquide entrant dans la citerne 60 est corrigé par la sortie du régulateur de pureté de l'azote soutiré de la tête de colonne MP 30.

Le flash généré par les variations de pression des colonnes induit en transitoire un déséquilibre de la ligne d'échange.

En cas de baisse de charge, les débits frigorigènes sont plus grands que les calorigènes ; en augmentation de charge, c'est le contraire.

En régime permanent, la pureté de l'oxygène gazeux est un résultat du rapport débit d'oxygène/débit d'air. En conséquence, pour un débit d'oxygène gazeux donné, l'amélioration de la pureté oxygène s'obtient en augmentant le débit d'air, donc en augmentant le débit de résiduaire par rapport au débit d'oxygène gazeux.

Pour une colonne BP 42 donnée et un débit d'oxygène donné, la pureté du résiduaire est une conséquence. Si on dispose du soutien de rectification, cela permet d'augmenter la capacité de distillation de la colonne BP 42 et donc l'ajustement relatif des puretés oxygène et résiduaire.

En régime permanent, un AIC 66 dont la mesure est la teneur en oxygène dans le résiduaire vient corriger l'ajustement du débit de soutien.

Cette invention s'applique également aux appareils comportant une colonne de distillation comprenant des garnissages structurés ou en vrac ou des plateaux perforés. Un appareil selon l'invention peut aussi comprendre une combinaison de garnissages et de plateaux perforés.

## Revendications

1. Procédé pour la séparation de l'air dans un appareil de distillation cryogénique comportant une colonne de distillation et dans lequel l'air d'alimentation est séparé pour produire une fraction riche en oxygène et une fraction riche en azote comme produits, dans lequel les puretés de ces produits sont maintenues essentiellement constantes pendant les variations de demande de ce produit ou de débit ou de pression de l'air d'alimentation, caractérisé en ce que l'on maintient ces puretés constantes :
a) en introduisant un excédent d'un liquide riche en azote dans l'appareil de distillation si la demande de produit ou le débit de l'air d'alimentation augmentent ou
b) en soutirant un excédent d'un liquide riche en azote de l'appareil de distillation et en stockant ce liquide, si la demande de produit ou le débit de l'air d'alimentation diminuent.

2. Procédé selon la revendication 1, dans lequel l'appareil comprend une colonne moyenne pression (30) et une colonne basse pression (42) et une conduite de reflux (44 ; 11, 12) qui permet au fluide de reflux d'être soutiré de la colonne moyenne pression (30) et d'être injecté dans la colonne basse pression (42).

3. Procédé selon la revendication 2, dans lequel l'excédent de liquide riche en azote est soutiré ou introduit au débit (44, 11, 12) de la conduite de reflux (44).

4. Procédé selon l'une des revendications 1 à 3, dans lequel l'excédent de liquide riche en azote est stocké dans (ou soutiré de) un réservoir (60) externe à la colonne (24).

5. Procédé selon l'une des revendications 1 à 3, dans lequel on stocke le liquide riche en azote dans la colonne de distillation (24).

6. Procédé selon l'une des revendications 1 à 5, dans lequel une turbine d'insufflation d'air (88) alimente la colonne de distillation (24), le débit de la turbine d'insufflation (88) étant modulable.

7. Procédé selon l'une des revendications 2 à 6, dans lequel on envoie une partie modulable de l'azote soutiré de la colonne basse pression (42) dans une turbine (88) pour le détendre avant de le réchauffer dans une ligne d'échange (32).

8. Procédé selon l'une des revendications 1 à 7, selon lequel une partie d'une fraction riche en azote produite dans la colonne basse pression (42) de l'appareil est réchauffée, comprimée et recyclée vers la colonne moyenne pression (30) de l'appareil et une partie modulable dudit azote recyclé est turbinée à une température intermédiaire, et réchauffée dans la ligne d'échange (32).

9. Procédé selon la revendication 8, selon lequel on mesure la teneur de la fraction riche en azote et on contrôle le débit de la fraction riche en azote recyclée vers la colonne moyenne pression (30) en fonction de ladite pureté de la fraction azote.

10. Procédé selon la revendication 8, selon lequel, pendant la phase transitoire, on mesure la teneur de la fraction riche en azote et on contrôle le débit de la fraction de cycle turbinée en fonction de ladite pureté de la fraction riche en azote.

11. Procédé selon l'une des revendications 2 et 3 ou selon l'une des revendications 4 à 10, quand celles-ci dépendent des revendications 2 ou 3, comprenant les étapes suivantes :
a) dans le cas d'une augmentation de la demande en oxygène, on augmente simultanément les débits des produits soutirés de la colonne basse pression (42) de l'appareil de telle sorte qu'un débit d'air admis par l'appareil augmente de lui-même, par augmentation de l'écart de température vaporiseur-condenseur (34) de la colonne (24) à la valeur nécessaire pour la production d'oxygène demandée à la pureté requise, la pression de la colonne basse pression (42) étant laissée libre de s'ajuster en fonction des caractéristiques de l'appareil et de la pression de l'air disponible ;
b) dans le cas d'une diminution de la demande en oxygène, on diminue simultanément les débits des produits soutirés de la colonne basse pression (42) de telle sorte qu'un débit d'air admis par l'appareil diminue de lui-même, par diminution de l'écart de température vaporiseur-condenseur (34) à la valeur nécessaire pour la production d'oxygène demandée à la pureté requise, la pression de la colonne basse pression (42) étant laissée libre de s'ajuster en fonction des caractéristiques de l'appareil et de la pression de l'air disponible.

12. Procédé selon la revendication 11, selon lequel la pureté d'un produit riche en oxygène est mesurée et le débit d'air traité est contrôlé par action sur le débit de(s) (la) fraction(s) riche(s) en azote, en fonction de cette pureté du produit riche en oxygène.

13. Procédé selon l'une quelconque des revendications 1 à 12, selon lequel au moins un produit riche en oxygène est soutiré sous forme liquide de la colonne, comprimé par pompe (82), et vaporisé dans une ligne d'échange (32) et une fraction au moins de l'air d'alimentation est comprimée à une pression plus élevée, liquéfiée dans la ligne d'échange (32) et envoyée sous forme liquide à la colonne de distillation (24).

14. Procédé selon la revendication 13, selon lequel lors d'une réduction de la demande en oxygène, et une réduction de la pression de l'air, le débit d'air comprimé et liquéfié dans la ligne d'échange (32) est réduit moins vite que le débit de liquide riche en oxygène qui est vaporisé dans la ligne d'échange, afin que l'excédent de débit d'air surpressé absorbe au moins en partie l'excédent de réfrigération apporté par le déséquilibre entre les débits des gaz se réchauffant et des gaz se refroidissant dans la ligne d'échange pendant cette phase.

15. Procédé selon la revendication 13, selon lequel lors d'une augmentation de la demande en oxygène, et une augmentation de la pression de l'air, le débit d'air comprimé et liquéfié est augmenté moins vite que le débit de liquide riche en oxygène qui est vaporisé dans la ligne d'échange (32), pour compenser le déséquilibre thermique qui se produit dans la ligne d'échange pendant cette phase résultant du déséquilibre du débit entre les produits se réchauffant et les produits se refroidissant dans celle-ci.

16. Procédé selon l'une quelconque des revendications ci-dessus, selon lequel l'appareil de distillation cryogénique fournit l'oxygène à une centrale de production d'électricité de type "cycle combiné à gazéifieur intégré" et la pression de l'air alimentant l'appareil de distillation cryogénique dépend de la production de gaz de la centrale IGCC.

17. Procédé selon l'une quelconque des revendications précédentes, dans lequel au moins une colonne (30, 42) contient des garnissages structurés.

18. Procédé selon l'une quelconque des revendications précédentes, dans lequel au moins une colonne (30, 42) contient des garnissages en vrac.

19. Procédé selon l'une quelconque des revendications précédentes, dans lequel au moins une colonne (30, 42) comprend des plateaux perforés.

20. Installation pour la séparation de l'air dans un appareil de distillation cryogénique comportant une colonne de distillation (30, 42) et dans laquelle l'air d'alimentation est séparé pour produire une fraction riche en oxygène et une fraction riche en azote comme produits, et des moyens pour assurer les puretés constantes de ces produits pendant les variations de demande de ce produit ou de débit ou de pression de l'air d'alimentation, ces moyens comprenant :
a) des moyens (11, 12, 44) pour introduire un excédent d'un liquide riche en azote dans l'appareil de distillation si la demande de produit ou le débit de l'air d'alimentation augmentent ou
b) des moyens (44, 60, 60A, 60B) pour soutirer un excédent d'un liquide riche en azote de l'appareil de distillation, si la demande de produit ou le débit de l'air d'alimentation diminuent caractérisée en ce qu'elle comprend des moyens de stockage (60A, 60B) de liquide riche en azote dans une colonne de l'appareil de distillation (24).

21. Installation selon la revendication 20, dans laquelle les moyens de stockage de liquide riche en azote comportent une citerne (60) reliée à deux sections de la colonne de distillation (24).

22. Installation selon les revendications 20 ou 21, dans laquelle une colonne basse pression (42) comprend un moyen de stockage (60A, 60B).

23. Installation selon l'une des revendications 20 à 22, dans laquelle l'appareil comprend une colonne basse pression (42), une colonne moyenne pression (30) et une conduite de reflux (44) qui permet au fluide de reflux d'être retiré de la colonne moyenne pression (30) et introduit dans la colonne basse pression (42).

24. Installation selon l'une des revendications 20 à 23, comportant une turbine d'insufflation (82) qui turbine de l'air alimentant la colonne de distillation (24), le débit de la turbine étant modulable.

25. Installation selon la revendication 23, comportant des conduites (46) reliant la tête de la colonne basse pression (42) de l'appareil avec la tête de la colonne moyenne pression (30) de l'appareil via un compresseur (76, 84), de sorte que l'azote puisse passer de la colonne basse pression (42) à la colonne moyenne pression (30).

26. Installation selon la revendication 25, comportant une turbine de détente (88) qui détend l'azote soutiré d'une colonne de distillation (42), le débit de la turbine de détente étant modulable.

27. Installation selon l'une des revendications 20 à 23, comportant une pompe (82) pour comprimer l'oxygène soutiré de la cuve d'une colonne basse pression (42) de la colonne (24).

28. Installation selon l'une des revendications 20 à 27, dans laquelle au moins une colonne contient des garnissages structurés.

29. Installation selon l'une des revendications 20 à 28, dans laquelle au moins une colonne (30, 42) contient des garnissages en vrac.

30. Installation selon l'une des revendications 20 à 29, dans laquelle au moins une colonne (30, 42) contient des plateaux perforés.

## Patentansprüche

1. Verfahren zur Zerlegung von Luft in einer eine Destillationssäule umfassenden, kryogenen Destillationsvorrichtung, in der die Speiseluft zerlegt wird, um als Produkte eine sauerstoffreiche Fraktion und eine stickstoffreiche Fraktion herzustellen, und die Reinheiten dieser Produkte bei Veränderungen des Bedarfs oder des Durchflusses oder des Drucks der Speiseluft im wesentlichen konstant gehalten werden, dadurch gekennzeichnet, daß dabei diese Reinheiten konstant gehalten werden durch
a) Einleiten eines Überschusses einer stickstoffreichen Flüssigkeit in die Destillationsvorrichtungen, wenn der Produktbedarf oder der Speiseluftstrom zunimmt, oder
b) Entnehmen eines Überschusses einer stickstoffreichen Flüssigkeit aus der Destillationsvorrichtung und Speicherung dieser Flüssigkeit, wenn der Prduktbedarf oder der Speiseluftstrom abnimmt.

2. Verfahren nach Anspruch 1, bei dem die Vorrichtung eine Mitteldrucksäule (30) und eine Niederdrucksäule (42) und eine Rückflußleitung (44; 11, 12) umfaßt, die ermöglicht, der Mitteldrucksäule (30) das Rückflußfluid zu entnehmen und es in die Niederdrucksäule (42) einzuleiten.

3. Verfahren nach Anspruch 2, bei dem der Überschuß an stickstoffreicher Flüssigkeit entnommen oder dem Strom (44, 11, 12) in der Rückflußleitung (44) zugegeben wird.

4. Verfahren nach einem der Ansprüche 1 bis 3, bei dem der Überschuß an stickstoffreicher Flüssigkeit in einem außerhalb der Säule (24) liegenden Behälter (60) gespeichert oder diesem entnommen wird.

5. Verfahren nach einem der Ansprüche 1 bis 3, bei dem die stickstoffreiche Flüssigkeit in der Destillationssäule (24) gespeichert wird.

6. Verfahren nach einem der Ansprüche 1 bis 5, bei dem die Destillationssäule (24) über eine Luftzufuhrturbine (88) gespeist wird, wobei der Durchsatz der Zufuhrturbine (88) veränderbar ist.

7. Verfahren nach einem der Ansprüche 2 bis 6, bei dem ein der Niederdrucksäule (42) entnommener, veränderbarer Stickstoffanteil vor dem Anwärmen in einer Austauschleitung (32) zur Entspannung in eine Turbine (88) eingeleitet wird.

8. Verfahren nach einem der Ansprüche 1 bis 7, nach dem ein Teil einer stickstoffreichen, in der Niederdrucksäule (42) der Vorrichtung hergestellten Fraktion angewärmt, verdichtet und zu der Mitteldrucksäule (30) der Vorrichtung rückgeführt wird, und ein veränderbarer Teil des rückgeführten Stickstoffs bei einer Zwischentemperatur entspannt und in der Austauschleitung (32) angewärmt wird.

9. Verfahren nach Anspruch 8, nach dem die Reinheit der stickstoffreichen Fraktion gemessen wird und der Strom des zu der Mitteldrucksäule (30) rückgeführten, stickstoffreichen Teils abhängig von der Reinheit der Stickstofffraktion geregelt wird.

10. Verfahren nach Anspruch 8, bei dem im Übergangszustand die Reinheit der stickstoffreichen Fraktion gemessen wird und der Strom der zirkulierenden, entspannten Fraktion abhängig von der Reinheit der stickstoffreichen Fraktion geregelt wird.

11. Verfahren nach einem der Ansprüche 2 und 3 oder nach einem der Ansprüche 4 bis 10, soweit sie abhängig von Anspruch 2 oder 3 sind, umfassend folgende Schritte:
a) im Fall einer Erhöhung des Sauerstoffbedarfs werden gleichzeitig die Ströme von der Niederdrucksäule (42) der Vorrichtung entnommenen Produkten erhöht, so daß ein über die Vorrichtung zugeführter Luftstrom sich mittels Erhöhung des Temperaturgefälles im Verdampfer/Kondensator (34) der Säule (24) auf den zur verlangten Herstellung von Sauerstoff mit der erforderlichen Reinheit benötigten Wert von selbst erhöht, wobei man sich den Druck der Niederdruckkolonne (42) abhängig von Vorrichtungsmerkmalen und dem Druck der verfügbaren Luft von selbst einstellen läßt;
b) im Fall einer Erniedrigung des Sauerstoffbedarfs werden die der Niederdruckkolonne (42) entnommenen Produktströme gleichzeitig verringert, so daß ein über die Vorrichtung zugegebener Luftstrom sich mittels Verringerung des Temperaturgefälles im Verdampfer/ Kondensator (34) auf den zur verlangten Herstellung von Sauerstoff mit der erforderlichen Reinheit benötigten Wert von selbst erniedrigt, wobei man sich den Druck der Niederdruckkolonne (42) abhängig von Vorrichtungsmerkmalen und dem Druck der verfügbaren Luft von selbst einstellen läßt.

12. Verfahren nach Anspruch 11, bei dem die Reinheit eines sauerstoffreichen Produkts gemessen wird und der behandelte Luftstrom mittels Einwirken auf den Strom der stickstoffreichen Fraktion(en) abhängig von der Reinheit des sauerstoffreichen Produkts geregelt wird.

13. Verfahren nach einem der Ansprüche 1 bis 12, bei dem mindestens ein sauerstoffreiches Produkt der Säule in flüssiger Form entnommen, mittels einer Pumpe (82) verdichtet und in einer Austauschleitung (32) verdampft wird, und mindestens ein Teil der Speiseluft bei einem höheren Druck verdichtet, in der Austauschleitung (32) verflüssigt und der Destillationssäule (24) in flüssiger Form zugeführt wird.

14. Verfahren nach Anspruch 13, bei dem bei einer Abnahme des Sauerstoffbedarfs und einer Abnahme des Luftdrucks der verdichtete und in der Austauschleitung (32) verflüssigte Luftstrom weniger schnell als der sauerstoffreiche Flüssigkeitsstrom verringert wird, der in der Austauschleitung verdampft wird, damit der Überschuß überspannter Luft mindestens einen Teil des Kälteüberschusses, der durch das Ungleichgewicht zwischen den sich erwärmenden Gasströmen und den sich abkühlenden Gasströmen in dieser Phase in der Austauschleitung entsteht, aufnimmt.

15. Verfahren nach Anspruch 13, bei dem bei einer Zunahme des Sauerstoffbedarfs und einer Zunahme des Luftdrucks der verdichtete und verflüssigte Luftstrom weniger schnell als der Strom an sauerstoffreicher Flüssigkeit erhöht wird, der in der Austauschleitung (32) verdampft wird, um das in der Austauschleitung in dieser Phase entstehende, thermische Ungleichgewicht auszugleichen, das durch ein Ungleichgewicht im Strom zwischen den sich erwärmenden Produkten und den sich abkühlenden Produkten in der Austauschleitung entsteht.

16. Verfahren nach einem der vorstehenden Ansprüche, bei dem die kryogene Destillationsvorrichtung Sauerstoff für die Gewinnung elektrischer Energie auf der Basis einer Verdampfung von Kohle oder Kohlewasserstoffen liefert und der Druck der die kryogene Destillationsvorrichtung speisenden Luft abhängig von der Gasproduktion bei der Verdampfung ist.

17. Verfahren nach einem der vorstehenden Ansprüche, bei dem mindestens eine Säule (30, 42) strukturierte Auskleidungen enthält.

18. Verfahren nach einem der vorstehenden Ansprüche, bei dem mindestens eine Säule (30, 42) Auskleidungen in loser Schüttung enthält.

19. Verfahren nach einem der vorstehenden Ansprüche, bei dem mindestens eine Säule (30,42) perforierte Böden enthält.

20. Anlage zur Zerlegung von Luft in einer kryogenen Destillationsvorrichtung, in der die Speiseluft zur Herstellung einer sauerstoffreichen Fraktion und einer stickstoffreichen Fraktion als Produkte zerlegt wird, und die eine Destillationssäule (30, 42) und Mittel zur Sicherstellung der konstanten Reinheit dieser Produkte bei Änderungen des Produktbedarfs oder des Stroms oder des Drucks der Speiseluft umfaßt, wobei diese Mittel umfassen:
a) Mittel (11, 12, 44) zum Einleiten eines Überschusses einer stickstoffreichen Flüssigkeit in die Destillationsvorrichtung, wenn der Bedarf an dem Produkt oder der Strom der Speiseluft zunimmt, oder
b) Mittel (44, 60, 60A, 60B) zum Entnehmen eines Überschusses einer stickstoffreichen Flüssigkeit aus der Destillationsvorrichtung, wenn der Bedarf an dem Produkt oder der Strom der Speiseluft kleiner wird, dadurch gekennzeichnet, daß sie Speichermittel (60A, 60B) für stickstoffreiche Flüssigkeit in einer Säule der Destillationsvorrichtung (24) umfaßt.

21. Anlage nach Anspruch 20, bei der die Speichermittel für stickstoffreiche Flüssigkeit ein mit zwei Bereichen der Destillationssäule (24) verbundenes Reservoir (60) umfassen.

22. Anlage nach Anspruch 20 oder 21, bei der eine Niederdrucksäule (42) ein Speichermittel (60A, 60B) umfaßt.

23. Anlage nach einem der Ansprüche 20 bis 22, bei der die Vorrichtung eine Niederdrucksäule (42), eine Mitteldrucksäule (30) und eine Rückflußleitung (44) umfaßt, die ermöglicht, der Mitteldrucksäule (39) das Rückflußfluid zu entnehmen und in die Niederdrucksäule (42) einzuleiten.

24. Anlage nach einem der Ansprüche 20 bis 23, umfassend eine Zufuhrturbine (82), die die Destillationssäule (24) speisende Luft entspannt, wobei die Fördermenge der Turbine veränderbar ist.

25. Anlage nach Anspruch 23, umfassend Leitungen (46), die den Kopf der Niederdrucksäule (42) der Vorrichtung mit dem Kopf der Mitteldrucksäule (39) der Vorrichtung über einen Verdichter (76, 84) verbinden, so daß der Stickstoff von der Niederdrucksäule (42) zur Mitteldrucksäule (30) strömen kann.

26. Vorrichtung nach Anspruch 25, umfassend eine Entspannungsturbine (88), die einer Destillationssäule entnommenen Stickstoff entspannt, wobei der Durchsatz der Entspannungsturbine veränderbar ist.

27. Vorrichtung nach einem der Ansprüche 20 bis 23, umfassend eine Pumpe (82) zum Verdichten von dem Sumpf einer Niederdrucksäule (42) der Säule (24) entnommenem Sauerstoff.

28. Vorrichtung nach einem der Ansprüche 20 bis 27, bei der mindestens eine Säule strukturierte Auskleidungen enthält.

29. Vorrichtung nach einem der Ansprüche 20 bis 28, bei der mindestens eine Säule (30, 42) Auskleidungen in loser Schüttung enthält.

30. Vorrichtung nach einem der Ansprüche 20 bis 29, bei der mindestens eine Säule (30, 42) perforierte Böden enthält.

## Claims

1. Process for separating air in a cryogenic distillation apparatus comprising a distillation column and in which the feed air is separated to produce an oxygen-rich fraction and a nitrogen-rich fraction as products, wherein the purities of these products are kept substantially constant during variations in the demand for this product or in the flow rate or pressure of the feed air, characterized in that these purities are kept constant :
a) by introducing an excess of a nitrogen-rich liquid into the distillation apparatus if the demand for the product or the flow rate of the feed air increases or
b) by withdrawing an excess of a nitrogen-rich liquid from the distillation apparatus and storing this liquid if the demand for the product or the flow rate of the feed air decreases.

2. Process according to claim 1, wherein the apparatus comprises a medium pressure column (30) and a low pressure column (42) and a reflux pipe (44; 11, 12) which enables the reflux fluid to be withdrawn from the medium pressure column (30) and to be injected into the low pressure column (42).

3. Process according to claim 2, wherein the excess of nitrogen-rich liquid is withdrawn or introduced into the flow (44, 11, 12) in the reflux pipe (44).

4. Process according to one of claims 1 to 3, wherein the excess of nitrogen-rich liquid is stored in (or withdrawn from) a reservoir (60) outside the column (24).

5. Process according to one of claims 1 to 3, wherein the nitrogen-rich liquid is stored in the distillation column (24).

6. Process according to one of claims 1 to 5, wherein an air blower turbine (88) supplies the distillation column (24), the flow rate of the blower turbine (88) being adjustable.

7. Process according to one of claims 2 to 6, wherein a variable part of the nitrogen withdrawn from the low pressure column (42) is directed to a turbine (88) to expand it before it is heated in an exchange line (32).

8. Process according to one of claims 1 to 7, according to which part of a nitrogen-rich fraction produced in the low pressure column (42) of the apparatus is reheated, compressed and recycled to the medium pressure column (30) of the apparatus and a variable part of the said recycled nitrogen is turbined at an intermediate temperature and reheated in the exchange line (32).

9. Process according to claim 8, according to which the composition of the nitrogen-rich fraction is measured and the flow rate of the nitrogen-rich fraction recycled to the medium pressure column (30) is controlled as a function of the said purity of the nitrogen fraction.

10. Process according to claim 8, according to which, during the transitional phase, the composition of the nitrogen-rich fraction is measured and the flow rate of the fraction of the cycle which is turbined is controlled as a function of the said purity of the nitrogen-rich fraction.

11. Process according to either of claims 2 or 3 or according to one of claims 4 to 10, when these depend on claims 2 or 3, comprising the following stages :
a) in the case of an increase in the oxygen demand, the flow rates of the products withdrawn from the low pressure column (42) of the apparatus are simultaneously increased so that an air flow received by the apparatus increases of its own accord, by increasing the vaporizer-condenser (34) temperature difference of the column (24) to the value necessary for the required oxygen production at the required purity, the pressure of the low pressure column (42) being left free to adjust itself according to the characteristics of the apparatus and the available air pressure;
b) in the case of a reduction in the oxygen demand, the flow rates of the products withdrawn from the low pressure column (42) are simultaneously reduced so that an air flow received by the apparatus decreases of its own accord, by reducing the vaporizer-condenser (34) temperature difference to the value necessary for the required oxygen production at the required purity, the pressure of the low pressure column (42) being left free to adjust itself according to the characteristics of the apparatus and the available air pressure.

12. Process according to claim 11, according to which the purity of an oxygen-rich product is measured and the flow rate of the air treated is controlled by acting on the flow rate of the nitrogen-rich fraction(s), as a function of this purity of the oxygen-rich product.

13. Process according to any of claims 1 to 12, according to which at least one oxygen-rich product is withdrawn in liquid form from the column, compressed by a pump (82) and vaporized in an exchange line (32), and at least a fraction of the feed air is compressed to a higher pressure, liquefied in the exchange line (32) and conveyed in liquid form to the distillation column (24).

14. Process according to claim 13, according to which, when there is a reduced oxygen demand and a reduction in air pressure, the flow rate of the air compressed and liquefied in the exchange line (32) is reduced less rapidly than the flow rate of the oxygen-rich liquid which is vaporized in the exchange line, so that the excess flow of air which is boosted in pressure absorbs, at least partly, the excess cooling provided by the imbalance between the warming gas and the cooling gas flow rates in the exchange line during this phase.

15. Process according to claim 13, according to which, when there is an increased oxygen demand and an increase in air pressure, the flow rate of compressed and liquefied air is increased less rapidly than the flow rate of oxygen-rich liquid which is vaporized in the exchange line (32), to compensate for the thermal imbalance which is produced in the exchange line during this phase resulting from the flow rate imbalance between the products heating and the products cooling in the latter.

16. Process according to any of the above claims, according to which the cryogenic distillation apparatus provides oxygen to an electrical power station of the "integrated gasifier combined cycle" type and the pressure of the air supplying the cryogenic distillation apparatus depends on the gas production by the IGCC power station.

17. Process according to any of the preceding claims, wherein at least one column (30, 42) contains structured packings.

18. Process according to any of the preceding claims, wherein at least one column (30, 42) contains bulk packings.

19. Process according to any of the preceding claims, wherein at least one column (30, 42) contains perforated plates.

20. Plant for the separation of air in a cryogenic distillation apparatus comprising a distillation column (30, 42) and in which the feed air is separated to produce an oxygen-rich fraction and a nitrogen-rich fraction as products, and means for ensuring the constant purities of these products during variations in the demand for this product or the flow rate or pressure of the feed air, these means comprising :
a) means (11, 12, 44) for introducing an excess of a nitrogen-rich liquid into the distillation apparatus if the demand for the product or the flow rate of the feed air increases or
b) means (44, 60, 60A, 60B) for withdrawing an excess of a nitrogen-rich liquid from the distillation apparatus if the demand for the product or the flow rate of the feed air decreases, characterized in that it comprises means of storage (60A, 60B) for nitrogen-rich liquid in a column of the distillation apparatus (24).

21. Plant according to claim 20, wherein the means for storing the nitrogen-rich liquid comprises a tank (60) connected to two sections of the distillation column (24).

22. Plant according to claims 20 or 21, wherein a low pressure column (42) includes a means of storage (60A, 60B).

23. Plant according to one of claims 20 to 22, wherein the apparatus comprises a low pressure column (42), a medium pressure column (30) and a reflux pipe (44) which enables the reflux fluid to be withdrawn from the medium pressure column (30) and to be introduced into the low pressure column (42).

24. Plant according to one of claims 20 to 23, having a blower turbine (82) which turbines air supplying the distillation column (24), the flow rate of the turbine being adjustable.

25. Plant according to claim 23, having pipes (46) connecting the top of the low pressure column (42) of the apparatus with the top of the medium pressure column (30) of the apparatus via a compressor (76, 84), so that nitrogen can pass from the low pressure column (42) to the medium pressure column (30).

26. Plant according to claim 25, having an expansion turbine (88) which expands nitrogen withdrawn from a distillation column (42), the flow rate of the expansion turbine being adjustable.

27. Plant according to one of claims 20 to 23, having a pump (82) for compressing oxygen withdrawn from the bottom of a low pressure column (42) of the column (24).

28. Plant according to one of claims 20 to 27, wherein at least one column contains structured packings.

29. Plant according to one of claims 20 to 28, wherein at least one column (30, 42) contains bulk packings.

30. Plant according to one of claims 20 to 29, wherein at least one column (30, 42) contains perforated plates.
